**Europäisches Patentamt**

**European Patent Office**

**Office européen des brevets**

(19)

(11) Veröffentlichungsnummer: **0 095 660**
**B1**

(12) **EUROPÄISCHE PATENTSCHRIFT**

(45) Veröffentlichungstag der Patentschrift: **05.09.90**

(51) Int. Cl.⁵: **G 01 C 11/02**

(21) Anmeldenummer: **83104915.0**

(22) Anmeldetag: **18.05.83**

(54) **Stereophotogrammetrisches Aufnahme- und Auswerteverfahren.**

(30) Priorität: **19.05.82 DE 3219032**

(43) Veröffentlichungstag der Anmeldung:
**07.12.83 Patentblatt 83/49**

(45) Bekanntmachung des Hinweises auf die
Patenterteilung:
**05.09.90 Patentblatt 90/36**

(84) Benannte Vertragsstaaten:
**FR GB IT**

(56) Entgegenhaltungen:
**EP-A-0 027 168**

**Jordan, Eggert, Kneissl: "Handbuch der
Vermessungskunde", Bd. IIIa/2,
Photogrammetrie, 10. Aufl., Stuttgart, 1972,
Seiten 1559-1572**

**Die Akte enthält technische Angaben, die nach
dem Eingang der Anmeldung eingereicht
wurden und die nicht in dieser Patentschrift
enthalten sind.**

(73) Patentinhaber: **Messerschmitt-Bölkow-Blohm
Gesellschaft mit beschränkter Haftung
Robert-Koch-Strasse
D-8012 Ottobrunn (DE)**

(72) Erfinder: **Hofmann, Otto, Dr.-Ing.
Lerchenstrasse 4
D-8011 Kirchstockach (DE)**

# Beschreibung

Die Erfindung betrifft ein stereophotogrammetrisches Aufnahme- und Auswerteverfahren zur Gewinnung der Orientierungsdaten einer ein Gelände überfliegenden Kamera und eines digitalen Gelände-Höhenmodells (DHM) unter Verwendung von drei quer oder schräg zur Flugrichtung angeordneten Sensorzeilen A, B, C und einer zugeordneten Optik zur fortlaufenden zeilenweisen Abtastung des überflogenen Geländes und Erzeugung von drei, aus jeweils unterschiedlicher Perspektive aufgenommenen, sich überdeckenden Bildstreifen $A_S$, $B_S$, $C_S$.

Es ist bekannte, daß mit opto-elektronischen Kameras, bei denen drei Sensorzeilen A, B, C einer Optik zugeordnet (siehe EP—A—0 027 168) und deren Zeilen quer zur Flugrichtung oder (gemäß DE—A—3 043 577, veröff. am 3.6.82) in einem bestimmten Winkel zueinander angeordnet sind, gleichzeitig drei Bildstreifen $A_S$, $B_S$, $C_S$ erzeugt werden können. Dabei kann durch Hinzu-Orientieren einef neuen Zeilenbildes an den bereits in seiner Orientierung als bekannt verausgesetzten Zeilenverband dieser beliebig verlängert werden. Die Erzeugung bzw. Beschaffung dieses als bekannt vorausgesetzten Zeilenbildverbandes ist aber noch mit Schwierigkeiten verbunden, und auch das schrittweise Hinzufügen von jeweils einem neuen Zeilenbild ist vom fehlertheoretischen Standpunkt aus nicht vorteilhaft.

Aufgabe der Erfindung ist es daher, ein Verfahren der eingangs genannten Art bereitzustellen, mit dem der gesamte Zeilenbildverband und die afgenommene Gelände-Oberfläche voraussetzungslos mit Informationen, die ausschließlich aus dieser Bildaufnahme selbst stammen, in einem einheitlichen, geschlossenen Verfahren rekonstruiert werden können.

Wenn hier von der Rekonstruktion der Kamera-Orientierung längs des Flugweges und des Geländes gesprochen wird, dann sind folgende, teilweise bereits aus der Stereo-Photogrammetrie bekannte Begriffe verwendet und Definitionen gemeint:

a) Unter der äußeren Orientierung einer Kamera versteht man ihre Positions-Koordinaten $X_o$, $Y_o$, $Z_0$ und ihre drei Neigungskomponenten $\omega$, $\varphi$, $\chi$ zum Zeitpunkt der Momentaufnahme. Grundsätzlich gelten diese Definitionen auch für die elektro-optische Zeilenkamera, wobei für jede Zeilen-Perioden-Nummer N ein aus den 6 Orientierungsparametern bestehender Orientierungssatz vorhanden ist. Die Zeilenperiodendauer ist elektronisch exakt eingestellt und liegt in der Größenordnung von ca. 1/100 sec.

Jede Zeilenperiode N erzeugt synchron drei Bildzeilen der Bildstreifen $A_S$, $B_S$, $C_S$ und infolge der exakt bekannten Zeilenperiodendauer ergibt sich für jede laufende Zeilen-Nummer N ein exakter Zeitpunkt. Den Flügbewegungen entsprechend verändern sich mit der laufenden Zeilen-Nummer N die Orientierungsparameter der Kamera, und es lassen sich aus der Zeilen-Nummer N bei annähernd bekannten Flugbewegungen die Orientierungsparameter der Kamera genähert bestimmen.

Es ist für die vorliegende Aufgabe nicht notwendig, daß die Orientierungsparameter jeder Zeilenperiode N bestimmt werden, da die Veränderung der Orientierungsparameter mehr oder weniger kontinuierlich erfolgt und es daher genügt, in bestimmten Abständen, d. h. Orientierungs-Intervallen längs des Flugweges die 6 Orientierungsparameter zu bestimmen. Diese Punkte werden nachfolgende als Orientierungs-Intervall-Punkte bezeichnet. Dazwischenliegende Orientierungsparameter könnten nach Bedarf als Funktion der Orientierungsparameter der benachbarten Orientierungs-Intervall-Punkte bestimmt werden, z.B. durch lineare Interpolation. Die Größe der Orientierungsintervalle hängt von der "Welligkeit" der Flugbewegungen und der gewünschten Rekonstruktionsgenauigkeit ab.

b) Gleiches gilt für das zu rekonstruierende Gelände, das durch ein sogenanntes "digitales Gelände-Höhenmodell" (DHM) repräsentiert wird, Es besteht aus regelmäßig oder unregelmäßig angeordneten Geländepunkten, deren Grundrißkoordinaten X, Y und deren Höhenkoordinaten Z zu bestimmen sind. Die zu wählende Punktdichte hängt von der "Welligkeit" des Geländes und der Genauigkeitsforderung ab, mit der das Gelände dargestellt werden soll. Auch in diesem Fall sind dazwischenliegende Geländepunkte nach Bedarf durch Interpolation bestimmbar.

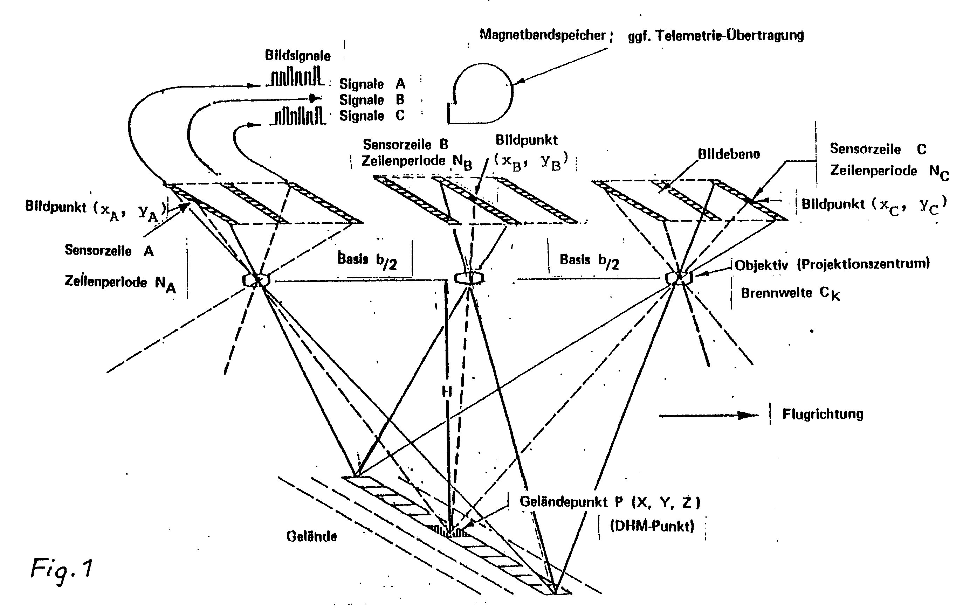

Jeder Geländepunkt und also auch jeder im Zug der Auswertung auszuwählende DHM-Punkt wird beim Überfliegen mit der Kamera zu drei verschiedenen Zeitpunkten bzw. laufenden Zeilenperioden $N_A$, $N_B$, $N_C$ an drei verschiedenen Orten (mit jeweils einem aus 6 Parametern bestehenden Orientierungssatz) auf den drei Bildzeilen A, B, C abgebildet und erzeugt dort einen Bildpunkt, dem jeweils die Bildkoordinaten x, y, in der Bildebene zugeordnet sind (Fig. 1).

Aufgabe der Erfindung ist es, lediglich aus diesen Bildkoordinatenpaaren x, y und ihren zugeordneten laufenden Zeilen-Perioden-Nummern N die Orientierungsparameter $X_o$, $Y_o$, $Z_o$, $\omega$, $\varphi$, $\chi$ der Orientierungs-Intervall-Punkte und die Gelände-Koordinaten X, Y, Z der DHM-Punkte zu ermitteln sowie die entzerrte Grundrißlage jedes einzelnen Bildpunkts (Orthophotos) und entzerrte Stereo-Bilder (Stereo-Partner) zu erzeugen.

Diese Aufgabe wird durch die im Patentanspruch gekannten Maßnahmen gelöst.

Demnach werden in einem ersten Prozeß a) mit der optoelektronischen Zeilenkamera synchron drei Bildstreifen aufgenommen, wobei ein Taktzähler die laufenden Zeilenperioden N der synchronisierten Sensoren A, B und C registriert und die den Zeilen zugeordneten diskreten Bildpunktsignale vorzugsweise digital gespeichert werden.

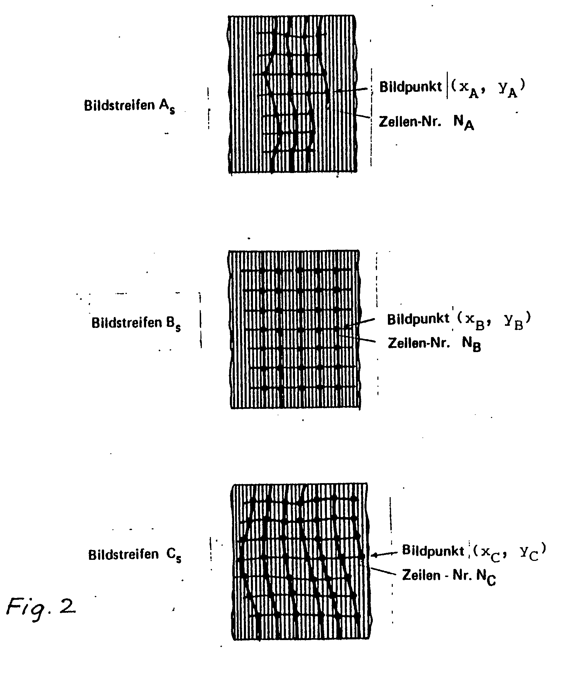

In einem zweiten Prozess b) werden vorzugsweise in dem von der mittleren Sensorzeile B erzeugten Bildstreifen $B_S$ maschenweise angeordnete Bildpunkte, die den DHM-Punkten entsprechen, nach bestimmten Kriterien mit dem Rechner ausgewählt und durch Flächenkorrelation in den beiden anderen Bildstreifen $A_S$ und $C_S$ jeweils die entsprechenden Bildpunkte des gleichen DHM-Punktes gefunden (Fig. 2). Hierzu ist ergänzend folgendes zu bemerken: Jeder einzelne Bildpunkt eines Bildstreifens, z.B. $A_S$, ist jeweils durch die Zeilen-Nummer N und ein auf der Sensorzeile liegendes diskretes Sensorelement (Sensor-Pixel), dessen Helligkeitssignal registriert ist, definiert. Da die Lage der Sensorzeile in der Bildebene der Kamera und die Lage jedes Pixels in der Sensorzeile bekannt ist, lassen sich für jedes Sensor-Pixel die x- und y-Koordinaten in der Bildebene berechnen. Die Bildstreifen setzen sich daher in Flugrichtung aus den laufenden Zeilen N und in Zeilenrichtung aus den laufenden Pixeln einer Zeile bzw. eines Sensors zusammen und ergeben eine rasterförmige Bildpunktmatrix, mit der die Flächen-Korrelation erfolgt. Die Pixel-Nummer der betreffenden Sensorzeile definiert eindeutig die Bildkoordinaten x, y, und die Zeilen-Nummer N definiert den Aufnahmestandpunkt der Kamera für diesen Zeitpunkt und die zugeordneten Orientierungsparameter. Als Ergebnis diese Prozesses entsteht eine Liste, die für jeden DHM-Punkt in der Regel drei (am Anfang und Ende des Streifens nur zwei) auf den Sensorzeilen A, B oder C liegende Punkte und ihre Koordinatenpaare x, y sowie eine jeweils zugeordnete Zeilenperioden-Nummer $N_A$, $N_B$, $N_C$ umfaßt.

In einem dritten Prozess c) werden aufgrund der annähernd bekannten Flugbewegungen (es wird z.B. eine gleichmäßige Geschwindigkeit, gleichbleibende Flugrichtung und Flughöhe und Normalfluglage $\omega = \varphi = \chi = 0$ angenommen) für jeden DHM-Punkt mit den Zeilen-Nummern bzw. Zeitpunkten $N_A$, $N_B$, $N_C$ vorläufige Orientierungsparametersätze (jeweils $X_o$, $Y_o$, $Z_o$, $\omega$, $\varphi$, $\chi$) berechnet und damit und mit den zugeordneten Bildkoordinaten $x_A$, $y_A$ und $x_B$, $y_B$ und $x_C$, $y_C$ mit Hilfe des räumlichen Vorwärtsschnittes vorläufige genäherte DHM-Koordinaten X, Y, Z berechnet.

In einem vierten Prozess d) werden Strahlen-Schnittbedingungen für jeden DHM-Punkt aufgestellt, wobei man entweder die sogenannten Koplanaritätsbedingungen oder die Kollinearitätsgleichungen benützen kann. Sie enthalten die beobachteten Bildkoordinaten x und y, die genähert berechneten Orientierungsparameter für den zugeordneten Zeilenpunkt N, die als Funktionen der Orientierungsparameter in den Orientierungs-Intervall-Punkten dargestellt werden und die genäherten DHM-Koordinaten. Es werden in bekannter Weise Fehlergleichungen nach vermittelnden Beobachtungen aufgestellt und in einem Ausgleichungsproczess nach der Methode der kleinsten Quadrate nach bekannten Methoden die wahrscheinlichsten und endgültigen Werte der Orietierungsparameter und der DHM-Punkte in einem beliebigen örtlichen Koordinatensystem und Maßstab bestimmt. Durch Einführung von wenigen sogenannten "Paßpunkten" läßt sich in bekannter Weise dieses Model in ein übergeordnetes geodätisches oder geographisches Koordinatensystem einfügen und "absolut" orientieren.

Erläuternd ist zu bemerken, daß, wie bereits beschrieben, jedem DHM-Punkt in der Regel drei Strahlen zugeordnet sind, die durch diesen DHM-Punkt, die Projektionszentren $X_o$, $Y_o$, $Z_o$ der Kamera in den drei Stand- bzw. Zeitpunkten $N_A$, $N_B$ und $N_C$ sowie den entsprechenden Bildpunkten x, y auf den Sensorzeilen A, B, C bestimmt sind. Die Bedingung, daß sich die Strahlen in dem DHM-Punkt schneiden, kann mathematisch durch die sogenannte Koplanaritätsbedingung oder mit Hilfe der sogenannten Kollinearitätsgleichungen erfüllt rden.

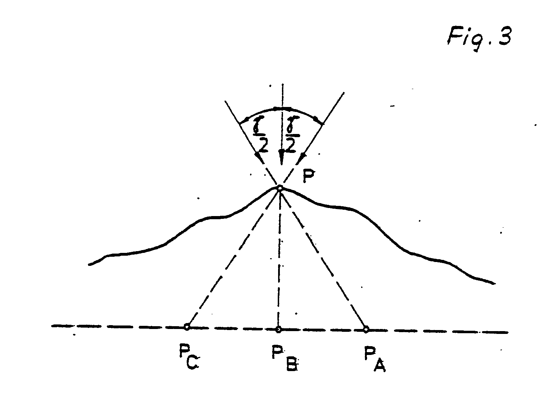

Mit Hilfe der so gefundenen DHM-Koordinaten und der entsprechenden Bildkoordinaten im Bildstreifen $B_S$ lassen sich nunmehr maschenweise sämtliche Bildpunkte des Bildstreifens $B_S$ durch bekannte Transformationsmethoden auf die richtige verzerrungsfreie Grundrißlage transformieren (Fig. 3).

In gleicher Weise können sämtliche Bildpunkte der Bildstreifen $A_S$ und $B_S$ so transformiert werden, daß verzerrungsfreie Stereo-Partner entstehen. Diese geschieht in der Weise, daß die DHM-Punkte P durch eine schräge Parallel-Projektion auf den Grundriß nach $P_A$ bzw. $P_C$ projiziert werden (Fig. 3). Durch maschenweise Transformation sämtlicher Bildpunkte der Streifen $A_S$ bzw. $C_S$ in diese Grundrißlage werden verzerrungsfrei Stereo-Bilder erzeugt. Für die Berechnung der Transformationsparameter werden jeweils die Maschenpunkte in den Bildstreifen $A_S$, $B_S$, $C_S$ und die ihnen im Grundriß zugeordneten Punkte $P_A$, $P_B$, $P_C$ benützt.

Die Fig. 1 zeigt den Aufnahmevorgang mit einer Drei-Zeilen-Kamera. Der Geländepunkt (DHM-Punkt) P wird im Zeilenperioden-Punkt $N_A$ auf die Sensorzeile A abgebildet (Bildkoordinaten $X_A$, $Y_A$), und in den Zeilenperiodenpunkten $N_B$ bzw. $N_C$ auf die Sensorzeilen B ($x_B$, $y_B$) bzw. C ($x_C$, $y_C$).

Die Fig. 2 zeigt die drei Bildstreifen $A_S$, $B_S$, $C_S$ mit den einzelnen Bildzeilen und den im Streifen $B_S$ ausgewählten und in den Streifen $A_S$ und $C_S$ korrelierenden DHM-Bildpunkten.

Die Fig. 3 zeigt einen DHM-Punkt mit seinen in den Grundriß projizierten Punkten $P_A$, $P_B$, $P_C$.

Zur Durchführung des erfindungsgemäßen Auswerteverfahrens wird mit einem die Flächenkorrelation durchführenden Rechner ein Stereobildschirm gekoppelt, auf dem parallel zum automatischen Korrelationsprozeß die Punktauswahl im Bildstreifen $B_S$ und die Punkt-Korrelation in den Bildstreifen $A_S$ bzw. $C_S$ mitläuft und für den Operateur sichtbar angezeigt wird. Der Operateur hat damit die Möglichkeit, den Korrelationsvorgang zu verfolgen und, für den Fall, daß es Schwierigkeiten gibt, durch interaktives Eingreifen Korrekturen anzubringen und/oder gegebenenfalls den unterbrochenen Korrelationsprozeß erneut in Gang zu setzen.

Dieser visuell interaktive Eingriff ist auch erforderlich, um

a) der Korrelationsbeginn zu initiieren,

b) Paßpunkte zu identifizieren und zu markieren,

c) interpretierende Auswertung der Objekte vornehmen zu können.

Die Stereo-Bildschirmdarstellung geschieht entweder

a) durch Überlagerung der beiden Stereo-Teilbilder in komplementären Farben (z.B. rot und grün) auf *einem* Farbbildschirm und Betrachtung mit entsprechenden Filtergläsern und Generierung *einer* Meßmarke, die relativ zum Bild in beiden Dimensionen (x, y) bewegt werden kann und wobei die Teilbilder gegeneinander in beiden Richtungen (x, y) verschiebbar sind.

b) durch Darstellung der beiden Stereo-Teilbender auf zwei Hälften eines Bildschirmes oder zwei separaten Bildschirmen und Generierung von zwei den Teilbildern zugeordneten Meßmarken, die gemeinsam und zumindest eine Meßmarke allein relativ zu dem Bild in beiden Richtungen (x und y) bewegt werden können. Die Betrachtung geschieht in diesem Fall mit Hilfe einer Stereo-Optik.

Die Meßmarken werden durch einen besonderen Meßmarkengenerator von erzeugenden Elektronenstrahl generiert und markieren im Bildspeicher den jeweils eingestellten Bildpunkt.

Die Meßmarken werden entweder vom Rechner oder vom Beobachter manuell positioniert. Die Meßmarken in beiden Bildern können gemeinsam und relativ zueinander durch entsprechende Einstellelemente (z.B. Rollkugel, Handräder uzw.) bewegt werden. Grundsätzlich ist es gleichgültig, ob die Marken in den Bildern verschoben werden oder ob die Marken auf dem Bildschirm in der Mitte stehen bleiben und durch sog. "panning" oder "scrolling" die Bilder beliebig relativ zu den feststehenden Marken verschoben werden. Die letztere Lösung ist im allgemeinen die bessere, da der Kopf des Beobachters stets in der gleichen Position bleiben kann.

Ein derartiger Bildschirm ist allgemein für die interpretierende und messende Auswertung wichtig, wobei entweder die Stereo-Meßmarken vom Beobachter geführt und eingestellt oder vom Rechner positioniert werden können.

Mit entsprechenden Hardware-Interfaces ist dieser Bildschirm auch für eine Real-Time-Beobachtung der aufgenommenen Objekte einsetzbar.

An sich bekannte Hard-Copy-Drucker und Bild-Schriebgeräte erlauben die Ausgabe der graphischen Ergebnisse. Die digitalen Daten können über alphanumerische Drucker, Magnetbänder und Platten ausgegeben werden.

Im Flugzeug, Flugkörper oder Satellit ist das Kamera-System (Dreizeilen-Stereo-Kamera) gegebenenfalls mit einem an sich bekannten sog. "High Density Digital Tape-Recorder" (HDDT) installiert.

Für Real-Time-Übertragung können die Bilddaten auch durch Telemetrie an die Bodenstation gegeben und dort auf HDDT gespeichert werden. Dann erfolgt, entweder in Echtzeit oder Off Line die Umsetzung der HDDT-Daten in Computercompatible Daten und die automatische und interaktive Auswertung, Weiterverarbeitung, Speicherung und gegebenenfalls Ausgabe der Bilddaten mit Hilfe des Stereo-Bildschirmes und der graphischen und digitalen Speicher- und Ausgabegeräte.

## Patentanspruch

Stereophotogrammetrische Aufnahme- und Auswerteverfahren zur Gewinnung der Orientierungsdaten einer ein Gelände überfliegenden Kamera und eines digitalen Gelände-Höhenmodells DHM unter Verwendung von drei quer oder schräg zur Flugrichtung angeordneten Sensorzeilen A, B, C und einer zugeordneten Optik zur fortlaufenden zeilenweisen Abtastung des überflogenen Geländes und Erzeugung von drei, aus jeweils unterschiedlicher Perspektive aufgenommenen, sich überdeckenden Bildstreifen $A_S$, $B_S$, $C_S$, wobei die Zeilenerzeugung der Sensoren A, B, C synchronisiert ist und homologe d.h. einander entsprechende Bildpunkte desselben DHM-Punktes durch Flächenkorrelation ermittelt werden, dadurch gekennzeichnet, daß

a) die laugenden Nummern N der Zeilenperioden von einem Zeilenzähler registriert werden,

b) in einem der Bildstreifen, vorzugsweise dem mittleren Bildstreifen $B_S$, maschenförmig angeordnete Bildpunkte, die den zu bestimmenden DHM-Punkten des digitalen Gelände-Höhenmodells DHM entsprechen, aufgesucht, die Flächenkorrelation mit den beiden anderen Bildstreifen durchgeführt und die Bildkoordinaten x, y der homologen Bildpunkte sowie die zugeordneten Zeilenperioden-Nummern $N_A$, $N_B$, $N_C$ bestimmt werden,

c) aufgrund der annähernd bekannten Flugbewegungen für jeden DHM-Punkt mit den Zeilen-Nummern $N_A$, $N_B$, $N_C$ die gehärten Orientierungs-Parameter der Kamera und daraus und mit den Bildkoordinaten $x_A$, $y_A$ und $x_B$, $y_B$ und $x_C$, $Y_C$ durch räumlichen Vorwärtsschnitt die DHM-Koordinaten X, Y, Z näherungsweise bestimmt werden, und

d) die Aufstellung von Strahlenschnittbedingungen für sämtliche drei, bzw. zwei zu jedem DHM-Punkt gehörigen Strahlen erfolgt, die durch den DHM-Punkt, die Projektionszentren der Kamera in den durch die Zeilenperiodennummern $N_A$, $N_B$, $N_C$ definierten Punkten und die auf den Sensorzeilen A, B, C liegenden Bildpunkte mit den jeweiligen x- und y-Koordinaten bestimmt sind, wobei die Orientierungs-Parameter als Funktionen von Orientierungs-Intervall-Punkten, die in gewissen Abständen längs des Flugweges angeordnet sind, dargestellt werden, Fehlergleichungen nach vermittelnden Beobachtungen aufgestellt und durch einen Ausgleichungsprozeß nach der Methode der kleinsten Quadrate die wahrscheinlichsten und endgültigen Werte der Orientierungs-Parameter in den Orientierungs-Intervall-Punkten und die DHM-Daten gefunden werden.

## Revendication

Procédé de prise de vue et d'interprétation stéréo-photogramétrique pour l'acquisition des données d'orientation d'une caméra survolant un terrain et d'une maquette de dénivellation de terrain numérique (DHM) avec l'emploi de trois lignes de capteurs (A, B, C) disposées transversalement ou obliquement au sens du vol et d'une optique y associée pour le balayage continu ligne par ligne du terrain survolé et production de trois bandes d'images ($A_S$, $B_S$, $C_S$), respectivement photographiées à partir de perspectives différentes et se chevauchant, la production des lignes des capteurs (A, B, C) étant synchronisée et des points d'image homologues, c'est-à-dire se correspondant les uns aux autres, du même point DHM étant déterminés par corrélation des surfaces, caractérisé par le fait que

a) les numéros (N) en défilement des périodes de lignes sont enregistrés par un compteur de lignes,

b) dans l'une des bandes d'images, de préférence la bande d'images médiane ($B_S$), on recherche des points d'image disposés en forme de mailles qui correspondent aux points (DHM) à déterminer de la maquette de dénivellation du terrain numérique DHM, on effectue la corrélation des surfaces avec les deux autres bandes d'images et on détermine les coordonnées d'image (x, y) des points d'image homologues, ainsi que les numéros y associés ($N_A$, $N_B$, $N_C$) des périodes de lignes,

c) sur la base des caractéristiques de vol approximativement connues, on détermine pour chaque point (DHM), avec les numéros de lignes ($N_A$, $N_B$, $N_C$) les paramètres d'orientation approximatifs de la caméra et, à partir de ceux-ci et avec les coordonnées d'image ($x_A$, $y_A$ et $x_B$, $y_B$ et $x_C$, $y_C$) on détermine approximativement les coordonnéees (DHM) (X, Y, Z) par visée spatiale directe et

d) on établit les conditions d'intersection des rayons pour tous les trois on deux rayons qui appartiennent à chaque point (DHM) et qui sont déterminés par le point (DHM), les centres de projection de la caméra aux points définis par les numéros ($N_A$, $N_B$, $N_C$) des périodes de lignes et les points d'image de coordonnées (x et y) situés sur les lignes de capteurs (A, B, C), les paramètres d'orientation étant représentés en tant que fonctions des points d'orientation qui sont disposés à certains intervalles le long de la trajectoire de vol, on établit des équations d'erreurs d'après des observations communiquées et, par un processus d'égalisation suivant la méthode des plus petits carrés, on trouve les valeurs les plus probables et définitives des paramètres d'orientation aux points d'orientation et les données (DHM).

**Claim**

Method for stereo-photogrammetric recording and evaluation for obtaining the orientation data of a camera flying overland and a digital altitude model (DHM), using three sensor line A, B, C, arranged transversely or inclined with respect to the flight direction, and associated optics for continuous line-by-line scanning of the area being flown over and producing three image strips A, B, C, overlapping each other and taken from different perspectives, wherein the line production of the sensors A, B, C is synchronised and homologous image points, i.e. corresponding with each other, for the same DHM-point are detected by way of area correlation, characterised in that

a) the current numbers N of the line periods are registered by a line counter;

b) in one of the image strips, preferably in the middle image strip $B_S$, mesh-like arranged image points which correspond to the DHM points of the digital altitude model to be determined, are selected, the area correlation with the other two image strips is performed and the image coordinates x, y of the homologous image points as well as the associated line-period numbers $N_A$, $N_B$, $N_C$, are determined;

c) based on the approximately known flight movements, the approximate orientation parameters of the camera are determined for each DHM point with line numbers $N_A$, $N_B$, $N_C$, and therefrom and with the image coordinates $x_A$, $y_A$, and $x_B$, $y_B$ and $x_C$, $y_C$, the DHM coordinates X, Y and Z are approximately determined by means of spatial intersection; and

d) beam-intersection conditions for all three or two beams associated with each DHM point are established, which are defined by the DHM point, the projection centres of the camera in the points defined by the line-period numbers $N_A$, $N_B$, $N_C$, and the image points of the sensor lines A, B, C with respective x- and y-coordinates, wherein the orientation parameters are represented as functions of the orientation-interval points, arranged at certain intervals along the flight path, error equations based on indirect observations are established and the most probable and final values of the orientation parameters in the orientation-interval points and the DHM data are found by way of a least squares adjustment process.

Fig. 1

Bildsignale

Signale A
Signale B
Signale C

Magnetbandspeicher; ggf. Telemetrie-Übertragung

Sensorzeile B
Zeilenperiode $N_B$

Bildpunkt $(x_B, y_B)$

Bildebene

Sensorzeile C
Zeilenperiode $N_C$

Bildpunkt $(x_A, y_A)$

Sensorzeile A

Zeilenperiode $N_A$

Basis $b_{/2}$

Basis $b_{/2}$

Bildpunkt $(x_C, y_C)$

Objektiv (Projektionszentrum)

Brennweite $C_K$

H

Flugrichtung

Geländepunkt P $(X, Y, Z)$

(DHM-Punkt)

Gelände

EP 0 095 660 B1

Bildstreifen A$_s$

Bildpunkt $(x_A, \ y_A)$

Zellen-Nr. $N_A$

Bildstreifen B$_s$

Bildpunkt $(x_B, \ y_B)$

Zellen-Nr. $N_B$

Bildstreifen C$_s$

Bildpunkt $(x_C, \ y_C)$

Zellen - Nr. $N_C$

*Fig. 2*

Fig. 3